# EUROPÄISCHE PATENTSCHRIFT

(11) **EP 1 019 621 B1**
(45) Veröffentlichungstag und Bekanntmachung des Hinweises auf die Patenterteilung: **15.01.2003**
(21) Anmeldenummer: 98954154.5
(22) Anmeldetag: 10.09.1998
(51) Int. Cl.: F02B 37/18, F02B 37/007, F02D 33/02

(54) **ANORDNUNG ZUM REGELN DES LADEDRUCKS EINER BRENNKRAFTMASCHINE**
DEVICE FOR CONTROLLING BOOST PRESSURE IN AN INTERNAL COMBUSTION ENGINE
DISPOSITIF POUR REGULER LA PRESSION DE SURALIMENTATION D'UN MOTEUR A COMBUSTION INTERNE

(30) Priorität: 02.10.1997 DE 19743667
(43) Veröffentlichungstag der Anmeldung: 19.07.2000
(73) Patentinhaber: ROBERT BOSCH GMBH, 70442 Stuttgart (DE)
(72) Erfinder: LOHMANN, Andrea, D-70195 Stuttgart (DE); BAEUERLE, Michael, D-71706 Markgroeningen (DE); RIES-MUELLER, Klaus, D-74906 Bad Rappenau (DE)
(86) Internationale Anmeldenummer: DE9802673
(87) Internationale Veröffentlichungsnummer: WO99018339

(56) Entgegenhaltungen:
- DE-A- 4 032 451
- DE-C- 19 513 156
- US-A- 5 497 751

## Beschreibung

### Stand der Technik

Die vorliegende Erfindung betrifft eine Anordnung zum Regeln des Ladedrucks einer Brennkraftmaschine, welche in seinem mindestens einen Abgasstrang einen Abgasturbolader und eine auf den Abgasturbolader einwirkendes Stellglied aufweist, das von einem ersten Regler angesteuert wird, wobei dieser erste Regler nur dann auf das Stellglied durchgeschaltet ist, wenn eine Fehlererkennungseinrichtung keinen Fehler beim Betrieb des Motors feststellt.

Bei einer Ladedruckregelung kann es passieren, daß bei einem Fehler beim Betrieb der Brennkraftmaschine (z. B. Verbrennungsdöaussetzer) oder durch fehlerhafte Sensoren (z.B. Luftdrucksensor, Luftmassensensor) die Drehzahl des Turboladers in einen kritischen Bereich hochgeregelt und dadurch der Turbolader zerstört wird. Wie aus der
DE 195 13 156 C1 hervorgeht, tritt dieses Problem insbesondere bei Brennkraftmaschinen mit zwei Zylinderbänken mit je einem Turbolader auf. Ist nämlich einer der beiden Turbolader defekt oder in einem der beiden Abgasstränge ein Katalysator verstopft, so wird die Regelschaltung die durch den einseitig auftretenden Fehler verursachte Regelabweichung des Ladedruck-Istwertes gegenüber dem Ladedruck-Sollwert dadurch ausgleichen, indem sie den Turbolader auf der fehlerfreien Seite hochregelt. Dabei kann die Turbolader-Drehzahl einen kritischen Wert erreichen, der zur Zerstörung des Turboladers führt. Um in einem Fehlerfall die Zerstörung eines Turboladers auszuschließen, wird gemäß der DE 195 13 156 C1 die Regelung abgeschaltet und auf eine Steuerung umgeschaltet, wenn eine Fehlererkennungseinrichtung einen Fehler einseitig in einem der beiden Abgasstränge erkennt. Die Steuerung ist so ausgelegt, daß der Turbolader nicht in seinen kritischen Drehzahlbereich hineinläuft. Bei der Steuerung im Fehlerfall hat anders als beim geschlossenen Regelkreis die Istgröße des Ladedrucks oder der Luftmasse keinen Einfluß mehr auf das Steuersignal für den Abgasturbolader. Die Steuerung begrenzt die Drehzahl des Abgasturboladers auf einen konstanten Wert. Dieser Wert stellt bei manchen Fehlerarten sicherlich eine Überreaktion bei der Begrenzung der Turboladerdrehzahl dar.

Aus der US 5 497 751 ist eine Regeleinrichtung für eine Brennkraftmaschine bekannt, die zur Regelung der Zündung bzw. Einspritzung für die einzelnen Zylinder zwei Regler vorsieht. Beiden Reglern werden die gleichen, aber von getrennten Sensoren gelieferten Eingangsgrößen zugeführt, so daß beide Regler die gleiche Regelinformation für die Zünd- bzw. Einspritzeinrichtung der Brennkraftmaschine zur Verfügung stellen. Die Regeleinrichtung besitzt deshalb einen zweiten Regler, um die Sicherheit bei einem in einem Flugzeug eingesetzten Motor zu erhöhen.

Der Erfindung liegt die Aufgabe zugrunde, eine Anordnung der eingangs genannten Art anzugeben, die im Fehlerfall mit einer flexiblen Ansteuerung des Abgasturboladers reagiert.

### Vorteile der Erfindung

Die genannte Aufgabe wird mit den Merkmalen des Anspruchs 1 dadurch gelöst, daß ein erster Regler, der den Turbolader im fehlerfreien Fall ansteuert, abgeschaltet und auf einen zweiten Regler umgeschaltet wird, wenn ein Fehler beim Betrieb des Motors festgestellt wird. Dabei erhält der zweite Regler als Eingangssignal eine andere Regelabweichung als der erste Regler. Als Istwert für die erste Regelabweichung dient ein im Ansaugtrakt auf der Druckseite des Turboladers von einem Luftdrucksensor gemessener Ladedruck, und als Istwert für die zweite Regelabweichung dient eine im Ansaugtrakt auf der Saugseite des Turboladers von einem Luftmassensensor gemessene Luftmasse. Mit einer solchen Anordnung kann die Ansteuerung des Turboladers erheblich flexibler an die Art des vorliegenden Fehlers angepaßt werden als bei einer starren Steuerung des Turboladers.

Vorteilhafte Ausführungen und Weiterbildungen der Erfindung gehen aus den Unteransprüchen hervor.

Ein im Fehlerfall geeignetes Ansteuersignal für den Turbolader entsteht durch Überlagerung des Ausgangssignals des zweiten Reglers mit einem Vorsteuersignal. Es ist vorteilhaft, das Vorsteuersignal von der Fehlerart abhängig zu machen.

Die Fehlererkennungseinrichtung soll verschiedenartigste Fehler erkennen können. Sie überwacht z.B. die für die Ladedruckregelung erforderlichen Sensoren und/oder eine vorhandene Lambdaregelung auf Fehler, und/oder sie erfaßt Verbrennungsaussetzer und signalisiert einen Fehler, wenn eine bestimmte Aussetzerrate überschritten wird.

Bei einer aus zwei Zylinderbänken bestehenden Brennkraftmaschine mit zwei Turboladern werden beide Turbolader gleichzeitig angesteuert, wobei eine Umschaltung vom ersten auf den zweiten Regler dann erfolgt, wenn die Fehlererkennungseinrichtung im Bereich eines der beiden Zylinderbänke einen Fehler erkennt.

### Beschreibung eines Ausführungsbeispiels

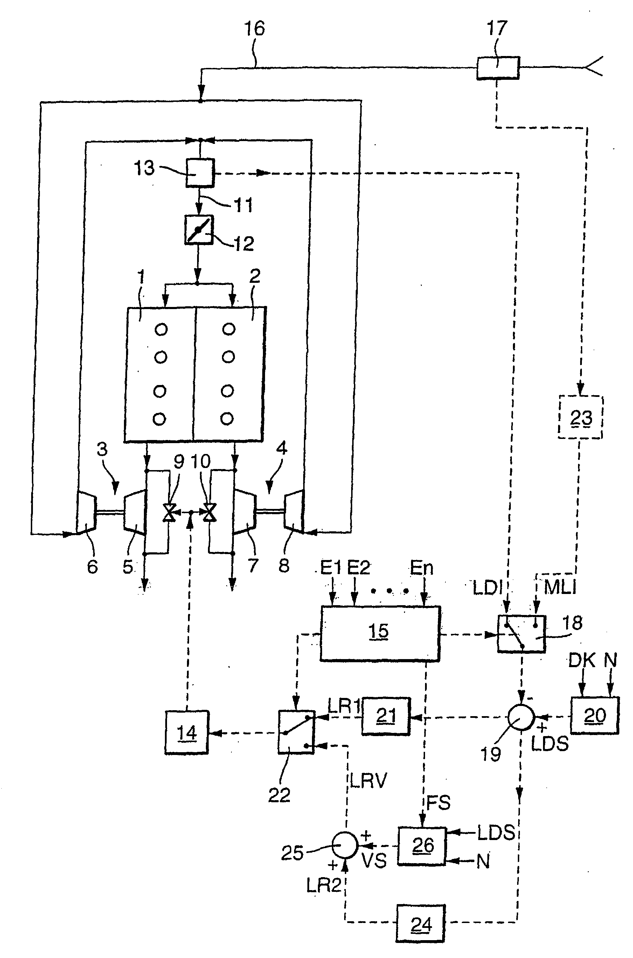

Anhand eines in der Zeichnung dargestellten Ausführungsbeispiels wird nachfolgend die Erfindung näher erläutert.

In der einzigen Figur der Zeichnung ist ein Blockschaltbild dargestellt, das die Funktion einer Anordnung zum Regeln des Ladedrucks einer Brennkraftmaschine verdeutlicht.

Bei dem in der Zeichnung dargestellten Ausführungsbeispiel wird von einer Brennkraftmaschine mit zwei Zylinderbänken 1 und 2 ausgegangen. Jeder dieser beiden Zylinderbänke 1 und 2 ist mit einem Abgasturbolader 3 und 4 ausgestattet. Der Abgasturbolader 3 weist eine Turbine 5 im Abgaskanal der ersten Zylinderbank 1 und einen damit gekoppelten Verdichter 6 im Ansaugtrakt auf. In gleicher Weise ist eine Turbine 7 des zweiten Abgasturboladers 4 im Abgaskanal der zweiten Zylinderbank 2 und ein damit gekoppelter Verdichter 8 im Ansaugtrakt angeordnet. Die Turbinen 5 und 7 der beiden Turbolader 3 und 4 sind jweils in bekannter Weise mit einem Bypass-Ventil 9 und 10 ausgestattet. Über diese Bypass-Ventile 9 und 10 besteht die Möglichkeit den von einem jeden Turbolader 3, 4 erzeugten Ladedruck auf einen gewünschten Wert zu regeln. Die Verdichter 6 und 8 der beiden Turbolader 3 und 4 speisen ihre Ladeluft in einen gemeinsamen Ansaugkanal 11 ein, in dem sich eine Drosselklappe 12 und ein Luftdrucksensor 13 für die Messung des Ladedrucks befinden. Am Ausgang der Drosselklappe 12 verzweigt sich der Ansaugkanal 11 auf die beiden Zylinderbänke 1 und 2.

Ein Stellglied 14, z.B. ein Taktventil, steuert die beiden Bypass-Ventile 9 und 10 der Turbolader 3 und 4 gleichzeitig an. Der Ladedruck der beiden Turbolader 3 und 4 läßt sich anstelle der Bypass-Ventile 9 und 10 auch über die Geometrie der Turbinen 5, 7 regeln.

Es ist eine Fehlererkennungseinrichtung 15 vorhanden, deren Eingänge E1, E2 ... En mit peripheren Einheiten der Brennkraftmaschine verbunden sind, um deren Fehlfunktionen erfassen zu können. Insbesondere sind die nachfolgend aufgeführten Fehlfunktionen von Bedeutung, die dazu führen, daß einer oder beide Turbolader 3, 4 in einen kritischen Drehzahlbereich hochgeregelt werden. Die Fehlererkennungseinrichtung 15 soll also Fehler erkennen können, die vom Ladedrucksensor 13, von einem im Ansaugrohr 16 angeordneten Luftmassensensor 17, von einer Lambdaregelung (nicht dargestellt) oder von einem Regelkreisfehler herrühren. Außerdem soll die Fehlererkennungseinrichtung 15 Aussetzer in beiden Zylinderbänken 1 und 2 erkennen können und einen Fehler signalisieren, wenn die Aussetzerrate einen vorgegebenen Grenzwert überschreitet. Die Fehlererkennung kann sich außerdem noch erstrecken auf Einspritzventilfehler und Fehler im Zündsystem. Auch ein leerer Tank soll erkannt werden sowie aktive Einspritzausblendungen. Überhaupt sollen alle Fehler erfaßt werden, die aus irgendeinem Grund (z.B. einseitiger Katalysatorfehler, einseitiger Turboladerfehler, überhöhte einseitige Aussetzerrate etc.) dazu führen, daß einer der beiden Turbolader 3, 4 in einen kritischen Bereich hochgeregelt wird.

Falls die Fehlererkennungseinrichtung 15 keinen Fehler erkennt, so bringt sie einen Schalter 18 in eine solche Stellung, daß ein vom Luftdrucksensor 13 gemessener Ladedruck-Istwert LDI auf einen Verknüpfungspunkt 19 durchgeschaltet wird, in dem die Ablage des Ladedruck-Istwertes LDI gegenüber einem Ladedruck-Sollwert LDS ermittelt wird, der von einem Sollwertgeber 20 vorgegeben wird. Der Sollwertgeber 20 ist ein von der Drosselklappenstellung DK (oder der Fahrpedalstellung) und der Motordrehzahl N abhängiges Kennfeld.

Die am Ausgang des Verknüpfungspunktes 19 anliegende Regelabweichung zwischen dem Ladedruck-Istwert LDI und dem Ladedruck-Sollwert LDS wird einem ersten Regler 21 (z.B. PDI-Regler) zugeführt. Im fehlerfreien Fall schaltet die Fehlererkennungseinrichtung 15 einen weiteren Schalter 22 in eine solche Position, daß das Ausgangssignal LR1 des ersten Reglers 21 an den Eingang des Stellgliedes 14 gelangt. Der Ladedruck der beiden Turbolader 3 und 4 wird in diesem fehlerfreien Fall also von einem geschlossenen Regelkreis mit dem ersten Regler 21 geregelt.

Hat nun die Fehlererkennungseinrichtung 15 einen Fehler erfaßt, so bringt sie den Schalter 18 in eine zweite Stellung, so daß anstelle des vom Luftdrucksensor 13 gemessenen Ladedruck-Istwertes LDI nun eine von einem Luftmassensensor 17 gemessene Luftmasse dem Verknüpfungspunkt 19 zugeführt wird. Aus der gemessenen Luftmasse kann auch ein Modell-Ladedruck-Istwert MLI in einem Schaltblock 23 ermittelt und dann dieser Modell-Ladedruck-Istwert MLI dem Verknüpfungspunkt 19 zugeführt werden.

Während der Luftdrucksensor 13 , der den Istwert einer für den erste Regler 21 bestimmten ersten Regelabweichung liefert, im Ansaugtrakt auf der Druckseite des Turboladers 3,4 angeordnet ist, ist der Luftmassensensor 17, der den Istwert einer für den zweiten Regler 24 bestimmten zweiten Regelabweichung liefert, im Ansaugtrakt auf der Saugseite des Turboladers angeordnet.

Das Ausgangssignal des Verknüpfungspunktes 19, das die Ablage des direkt vom Luftmassensensor gelieferten Istwertes oder des Modell-Ladedruck-Istwertes MLI gegenüber dem Ladedruck-Sollert LDS wiedergibt, gelangt zu einem zweiten Regler 24, der vorzugsweise ein P-Regler ist, aber auch z.B. ein PD- oder PID-Regler sein kann. In einem Verknüpfungspunkt 25 wird dem Ausgangssignal LR2 des zweiten Reglers 24 ein Vorsteuersignal VS überlagert. Dieses Vorsteuersignal VS wird in einem Schaltblock 26 in Abhängigkeit von der Motordrehzahl N und vom Soll-Ladedruck LDS gebildet.

Die Fehlererekennungseinrichtung 15 kann der Vorsteuerung 26 über ein Fehlersignal FS mitteilen, von welcher Art der erkannte Fehler ist, so daß die Vorsteuerung ein von der Art des Fehlers abhängiges Vorsteuersignal VS erzeugt.

Das im Verknüpfungspunkt 25 durch die Überlagerung des Regler-Ausgangssignals LR2 und des Vorsteuersignals VS entstandene Signal LRV wird auf das Stellglied 14 durchgeschaltet. Dazu bringt die Fehlererkennungseinrichtung 15 den Schalter 22 in die entsprechende Position. Der zweite Regelkreis einschließlich der überlagerten Vorsteuerung bewirkt, daß keiner der Turbolader 3, 4 aufgrund eines Fehlers soweit hochgeregelt wird, daß er seinen kritischen Drehzahlbereich erreicht. Insbesondere wenn bei einem Bi-Turbolader gemäß dem Ausführungsbeispiel einer der beiden Turbolader defekt ist oder durch einen verstopften Katalysator in einem der Abgasstränge einseitig eine Regelabweichung hervorgerufen wird, wird der andere Turbolader daran gehindert, den Ladedruck-Sollwert dadurch zu erreichen, daß er über seinen kritischen Drehzahlbereich hinaus hochgeregelt wird.

Die vorangehend beschriebene Umschaltung von einer ersten Regelung auf eine zweite Regelung kann auch eingesetzt werden zum Schutz des Turboladers einer Brennkraftmaschine mit nur einer Zylinderbank, wenn nämlich die erste Regelung aufgrund eines Fehlers den Turbolader unzulässig weit hochregeln würde.

## Patentansprüche

1. Anordnung zum Regeln des Ladedrucks einer Brennkraftmaschine, welche in seinem mindestens einen Abgasstrang einen Abgasturbolader (3, 4) und ein auf den Abgasturbolader (3, 4) einwirkendes Stellglied (14) aufweist, das von einem ersten Regler (21) angesteuert wird, wobei dieser erste Regler (21), dem eine erste Regelabweichung zugeführt wird, nur dann auf das Stellglied (14) durchgeschaltet ist, wenn eine Fehlererkennungseinrichtung (15) keinen für den Turbolader kritischen Fehler beim Betrieb des Motors feststellt, **dadurch gekennzeichnet, daß** eine Umschaltung von dem ersten Regler (21) auf einen zweiten Regler (24) erfolgt, wenn die Fehlererkennungseinrichtung (15) einen kritischen Fehler erkennt, wobei der zweite Regler (24) als Eingangssignal eine zweite Regelabweichung erhält, daß als Istwert für die erste Regelabweichung ein im Ansaugtrakt auf der Druckseite des Turboladers (3, 4) von einem Luftdrucksensor (13) gemessener Ladedruck (LDI) dient und daß als Istwert für die zweite Regelabweichung eine im Ansaugtrakt auf der Saugseite des Turboladers (3, 4) von einem Luftmassensensor (17) gemessene Luftmasse dient.

2. Anordnung nach Anspruch 1, **dadurch gekennzeichnet, daß** im Fehlerfall das Ansteuersignal für das Stellglied (14) durch Überlagerung des Ausgangssignals (LR2) des zweiten Reglers (24) mit einem Vorsteuersignal (VS) entsteht.

3. Anordnung nach Anspruch 2, **dadurch gekennzeichnet, daß** das Vorsteuersignal (VS) von der Fehlerart abhängt.

4. Anordnung nach einem der Ansprüche 1 bis 3, **dadurch gekennzeichnet, daß** die Fehlererkennungseinrichtung (15) die für die Ladedruckregelung erforderlichen Sensoren (13, 17) auf Fehler hin überwacht.

5. Anordnung nach einem der Ansprüche 1 bis 3, **dadurch gekennzeichnet, daß** die Fehlererkennungseinrichtung (15) einen Lambda-Regelkreis auf Fehler hin überwacht.

6. Anordnung nach einem der Ansprüche 1 bis 3, **dadurch gekennzeichnet, daß** die Fehlererkennungseinrichtung (15) Verbrennungsaussetzer erfaßt.

7. Anordnung nach Anspruch 1, **dadurch gekennzeichnet, daß** bei einer aus zwei Zylinderbänken (1, 2) bestehenden Brennkraftmaschine mit zwei Turboladern (3, 4) das Stellglied (14) auf beide Turbolader (3, 4) gleichzeitig einwirkt und daß eine Umschaltung vom ersten auf den zweiten Regler (21, 24) erfolgt, wenn die Fehlererkennungseinrichtung (15) im Bereich eines der beiden Zylinderbänke (1, 2) einen Fehler erkennt.

## Claims

1. Arrangement for controlling the charge pressure of an internal combustion engine which has, in its at least one exhaust train, an exhaust gas turbocharger (3, 4) and an actuator element (14) which acts on the exhaust gas turbocharger (3, 4) and is actuated by a first regulator (21), this first regulator (21), at which a first control error is supplied, being connected through to the actuator element (14) only if a fault detection device (15) does not detect any fault which is critical for the turbocharger while the internal combustion engine is operating, **characterized in that** switching over from the first regulator (21) to a second regulator (24) occurs if the fault detection device (15) detects a critical fault, the second regulator (24) receiving a second control error as input signal, **in that** a charge pressure (LDI) which is measured by an air pressure sensor (13) on the pressure side of the turbocharger (3, 4) in the intake train is used as an actual value for the first control error, and **in that** an air mass flow rate which is measured by an air mass flow rate sensor (13) on the suction side of the turbocharger (3, 4) in the intake train is used as an actual value for the second control error.

2. Arrangement according to Claim 1, **characterized in that**, in the event of a fault, the actuation signal for the actuator element (14) is reduced by superimposing a pilot control signal (VS) on the output signal (LR2) of the second regulator (24).

3. Arrangement according to Claim 2, **characterized in that** the pilot control signal (VS) depends on the type of fault.

4. Arrangement according to one of Claims 1 to 3, **characterized in that** the fault detection device (15) monitors the sensors (13, 17), necessary for regulating the charge pressure, for faults.

5. Arrangement according to one of Claims 1 to 3, **characterized in that** the fault detection device (15) monitors a lambda control circuit for faults.

6. Arrangement according to one of Claims 1 to 3, **characterized in that** the fault detection device (15) senses combustion misfires.

7. Arrangement according to Claim 1, **characterized in that**, in the case of an internal combustion engine which is composed of two cylinder banks (1, 2) and has two turbochargers (3, 4), the actuator element (14) acts simultaneously on both turbochargers (3, 4), and **in that** switching over from the first to the second regulator (21, 24) takes place if the fault detection device (15) in the region of one of the two cylinder banks (1, 2) detects a fault.

## Revendications

1. Dispositif pour réguler la pression de suralimentation d'un moteur à combustion interne qui présente dans son tube de gaz d'échappement, au moins au nombre d'un, une turbosoufflante (3, 4) de gaz d'échappement et un actionneur qui agit sur la turbosoufflante (3, 4) de gaz d'échappement et qui est commandé par un premier régulateur (21), ce premier régulateur (21) n'étant mis en relation avec l'actionneur (14) que lorsqu'une installation de reconnaissance d'erreurs établit qu'il n'y a pas d'erreur lors du fonctionnement du moteur,
**caractérisé en ce qu'**
un basculement du premier régulateur (21) sur un deuxième régulateur (24) a lieu quand l'installation de reconnaissance d'erreurs (15) reconnaît une erreur critique, le deuxième régulateur (24) en tant que signal d'entrée obtenant un deuxième écart de régulation de sorte qu'une pression de suralimentation (LD1) mesurée par un capteur de pression d'air (13) dans la zone d'aspiration sur le côté refoulement de la turbosoufflante (3, 4) sert de valeur effective pour le premier écart de régulation et qu'une masse d'air mesurée par un capteur de masse d'air (17) dans la zone d'aspiration du côté aspiration de la turbosoufflante (3, 4) sert de valeur effective pour le deuxième écart de régulation,

2. Dispositif selon la revendication 1,
**caractérisé en ce qu'**
en cas d'erreur le signal d'excitation pour le composant de réglage (14) est obtenu par superposition du signal de sortie (LR2) du deuxième régulateur (24) et d'un signal pilote (VS).

3. Dispositif selon la revendication 2,
**caractérisé en ce que**
le signal pilote (VS) dépend du type d'erreur.

4. Dispositif selon l'une des revendications 1 à 3,
**caractérisé en ce que**
l'installation de reconnaissance d'erreurs (15) surveille pour ce qui est des erreurs les capteurs (13, 17) nécessaires à la régulation de la pression de suralimentation.

5. Dispositif selon l'une des revendications 1 à 3,
**caractérisé en ce que**
l'installation de reconnaissance d'erreurs (15) surveille pour ce qui est des erreurs un circuit de régulation lambda.

6. Dispositif selon l'une des revendications 1 à 3,
**caractérisé en ce que**
l'installation de reconnaissance d'erreurs (15) enregistre les ratés de combustion.

7. Dispositif selon la revendication 1,
**caractérisé en ce que**
pour un moteur à combustion interne composé de deux rangées de cylindres (1, 2) avec deux turbosoufflantes (3, 4), le composant de réglage (14) exerce simultanément un effet sur les deux turbosoufflantes (3, 4) et qu'un basculement du premier sur le second des régulateurs (21, 24) a lieu quand l'installation de reconnaissance d'erreurs (15) reconnaît une erreur dans la zone d'une des deux rangées de cylindres (1, 2).
